# EUROPEAN PATENT SPECIFICATION

(11) **EP 1 564 029 B1**
(45) Date of publication and mention of the grant of the patent: **13.06.2012**
(21) Application number: 05100653.4
(22) Date of filing: 01.02.2005
(51) Int. Cl.: B60C 11/03, B60C 11/13

(54) **Tread pattern with elongated tread elements**
Laufflächenprofil mit gestreckten Profilelementen
Bande de roulement ayant des éléments en relief allongés

(30) Priority: 10.02.2004 US 775795
(43) Date of publication of application: 17.08.2005
(73) Proprietor: The Goodyear Tire & Rubber Company, Akron, OH 44316-0001 (US)
(72) Inventor: Heinen, Richard, 6720, Habay-la-Neuve (BE)
(74) Representative: Kutsch, Bernd

(56) References cited:
- EP-A- 0 890 456
- WO-A-2004/056588
- DE-C- 614 574
- US-A- 3 674 077
- US-A- 5 318 085

## Description

### Field of the Invention

The present invention is directed to a tire tread. More specifically, the invention is directed to a tire tread comprising at least one column of long blocks, the blocks shaped to work like a circumferential rib in regards to noise, durability, and handling, but acting like a block for aquaplaning and wet drive performances

### Background of the Invention

The features of tire treads are generally divided into two categories: ribs and blocks.

A rib is a continuously extending tread element that encircles the entire tire tread circumference. The rib may be provided with limited grooving, but any such provided grooves will not complete bisect the rib. Ribs are known for providing less noise as there are fewer tread edges and lateral grooves entering and exiting the footprint. The fewer number of tread edges of a rib also provides for improved wear and the solid nature of the rib provides for better handling and stability of the tread.

A block is a discrete tread element and may be arranged to extend in either a circumferential or lateral direction of the tread. Blocks are defined by grooves that extend in opposing directions. Due to the increased number of grooves to form the blocks, as opposed to the ribs, the water flow characteristics of a block tread generally tend to be greater than for a rib tread. The greater number of edges also provides for greater traction.

The use of a ribs or blocks in a tread may be dictated by the end use of the tire. Ribs are often selected for use on truck tire treads to provide durability, handling, and noise characteristics. Blocks are selected for use on passenger tires to provide traction and wet drive performance. In designing a tire tread, a tread designer might also combine rib and block elements to optimize the tire tread performance. For example, a rib at the centerline of a tire provides for a quieter ride since the centerline of the tire is always in the contact patch, while blocks on both sides of the centerline rib assist in water evacuation and traction.

EP-A- 0 890 456 describes an all-season pneumatic radial tire for a passenger car having two circumferential grooves and a circumferentially extending column of tetragon shaped blocks located between these grooves. Each block is separated from an adjacent block by an inclined lateral groove forming an angle between 10 and 45 degrees with one of the circumferential grooves. A similar tread pattern is also described in DE-C- 614 574.

### Summary of the Invention

The present invention is directed to a tread element that combines the characteristics of both a rib and a block tread element. Disclosed is a pneumatic tire having a tread. The tread has two circumferential grooves and a circumferentially extending column of tetragon or preferably parallelogram shaped blocks located between the two circumferential grooves. In the circumferential extending column of blocks, each block is separated from an adjacent block by an inclined lateral groove, the inclined lateral groove forming an angle between 10° to 25° with one of the circumferential grooves. Furthermore, each block in the column has a circumferential length L at least equal to the normal pressure footprint length L_{F} of the tire. The length of the blocks permits the column of adjacent blocks to act as a rib while maintaining desired block characteristics. Preferably, the blocks have a length L in the range of 100 - 400% of the normal pressure footprint length L_{F} of the tire.

In one disclosed aspect, for any straight line drawn in the lateral direction of the tread, the straight line passes through at least two circumferentially adjacent blocks in the circumferentially extending column of blocks. Preferably, the straight line passes through at least three blocks in the circumferentially extending column of blocks.

The column is located in just one tread half.

In another disclosed aspect of the invention, each block has a pair of opposing sides forming a wall of the circumferential grooves. The pair of sides are circumferentially spaced by a distance f in the range of 20% to 60% of the circumferential length L of the block. Additionally, at least one of these sides may be inclined at angle greater than 0° relative to the tread centerline.

In another aspect, the inclined lateral grooves have a width less than the width of the circumferential grooves.

In another aspect, the blocks have a width W_{B}, measured perpendicular to the longest sides of the blocks, in the range of 15% to 65% the distance between the circumferential grooves.

In another aspect, to reduce premature wear, at least one of the acute angled corners of each block may be chamfered.

In another aspect, to strength the block, the sides of the blocks forming a wall of the circumferential grooves may have the radially outer portion thereof inclined at an angle, relative to the radial direction of the tire, greater than the inclination angle of the radially inner portion of the wall. Preferably, the radially outer portion of the groove wall is inclined at least 10° greater than the radially inner portion of the groove wall.

The tread is divided at a tread centerline into two tread halves and the two circumferential grooves are located in one tread half. One of the two circumferential grooves is preferably located on the tread centerline.

In a further aspect of the invention, each block has a pair of acute angled corners, at least one of the acute angled corners being chamferred.

In a further aspect of the invention, the circumferential grooves have a pair of opposing groove walls, one of the groove walls forming one side of the parallelogram shaped blocks and having a radially outer portion inclined at a greater angle relative to the radial direction of the tire than the radially inner portion of the groove wall. Preferably, the radially outer portion of the groove wall is inclined at least 10° greater than the radially inner portion of the groove wall.

In another aspect of the invention, the inclined lateral grooves have a width less than the width of the circumferential grooves.

In yet a further aspect of the invention, alternating blocks in the circumferentially extending columns have different circumferential lengths.

### Brief Description of the Drawings

The invention will be described by way of example and with reference to the accompanying drawings in which:
FIG. 1 is a tire tread in accordance with the present invention;
FIG. 2 is an alternative tread configuration (Comparative Example);
FIG. 3 is a footprint of a tire in accordance with the present invention;
FIG. 4 is a view of the tread along line 4-4 in FIG. 1;
FIG. 5 is a view of the tread along line 5-5 in FIG. 1;
FIGS 6-7 are alternative tread configurations.

### Detailed Description of the Invention

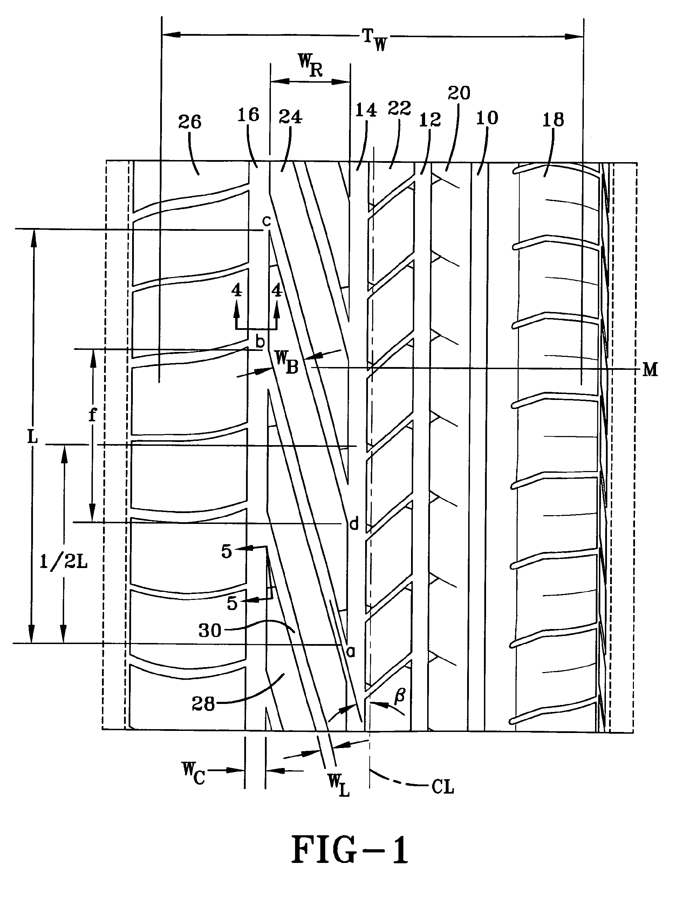

FIG. 1 illustrates a tire tread for a pneumatic tire. The instant tread has an asymmetrical configuration formed in part by circumferential grooves 10, 12, 14, 16. In the instant tread configuration, the circumferential grooves 10, 12, 14, 16 partially form two ribs 18, 20 and three block columns 22, 24, 26. The tire tread has a centerline CL and when employed on a pneumatic tire and inflated to a normal inflation pressure, forms a footprint FP on the surface the tire contacts.

The principal feature of interest in the tread is the middle block column 24. The individual blocks 28 in the column 24 are formed by the pair of adjacent circumferential grooves 14, 16 and lateral grooves 30 extending between the circumferential grooves 14, 16. The blocks 28 have an extended tetragon shape, defined by sides a-b, b-c, c-d, d-a, with the longest sides a-b, c-d of the tetragon bounded by the lateral grooves 30. The short sides b-c, d-a of the blocks 28 are formed by the circumferential grooves 14, 16. For the illustrated blocks 28, the tetragon shape preferably is a parallelogram.

The blocks 28 have a circumferential length L, measured parallel to the tread centerline CL and from the farthest points a, c of the block 28. The opposing short sides b-c, d-a are circumferentially spaced from each other along the tread length by a distance f. The spacing distance f is 20 to 60% of the circumferential block length L. Preferably, the spacing distance f is 40 to 50 % of the circumferential block length L. The spacing distance f will increase with an increased tire diameter and decrease with a decreased tire diameter. The spacing distance f will partially dictate the block length L relative to the tire circumference.

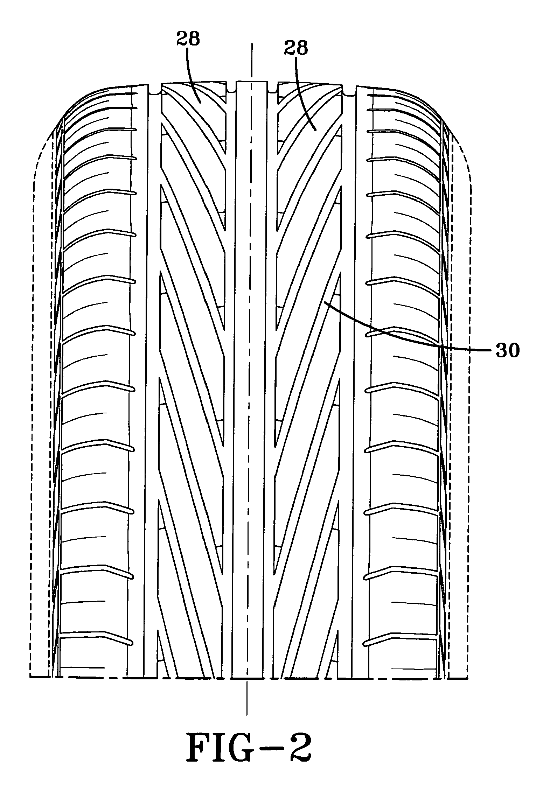

The lateral grooves 30 partially forming the blocks 28 are inclined at a minimum angle β of 10° relative to either circumferential groove or the tread centerline CL. The lateral grooves 30 have a maximum angle β of 25° relative to the circumferential grooves. The lateral grooves 30 may be inclined in either direction, relative to the tread centerline CL, see also FIG. 2, wherein the tread is a directional tread with two columns of the extended length blocks 28, one column in each half of the tread. The lateral grooves 30 have a width W_{L} less than the width W_{C} of the circumferential grooves. The width W_{L} may vary depending on the inclination angle β and the number or circumferential length L of the blocks 28 along the circumference of the tire tread.

The number of extended length blocks 28 in the tire circumference depends on the inclination angle β of the lateral grooves 30, the lateral groove width W_{L} and the block width W_{B}. The block width W_{B} is measured perpendicular to the two longest sides a-b, c-d, of the blocks 28. The block width W_{B} ranges from 15% to 65% of the column width W_{R}. The column width W_{R} is independent of the number of blocks 28 or the lateral groove inclination angle β, and is 15% to 50% of the tread width T_{W}. For larger sized tires, such as a 315/35R20, the column width W_{R} may be closer to the maximum preferred width of 50% of the tread width T_{W}.

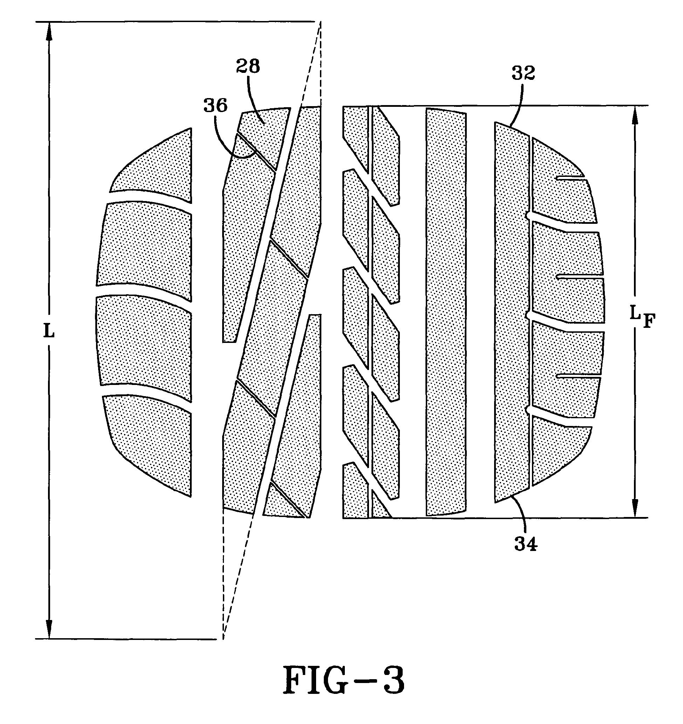

To enable the block column 24 to achieve rib-like characteristics, the circumferential length L of each block 28 is at least equal to the footprint length L_{F}, see FIG. 3. FIG. 3 is a footprint of the tire of the FIG. 1, with the non-contact portion of the blocks 28 shown in dotted line. For the illustrated footprint, the block length L is approximately 150% the footprint length L_{F}. The footprint was from a tire size 245/45R18, inflated to 2.2 bar (31.9 psi, 2.24 kgf/cm²), and loaded at 630 kg. As can be appreciated by those skilled in the art, when the load on a tire is decreased, the area of the tire footprint decreases. Thus, at a lower load, the ratio between the block length L and the footprint length L_{F} increases. The footprint length L_{F}, is measured at zero speed, inflated to the manufacturer's recommend tire pressure (called the "normal pressure") and subjected to the design load. The footprint length L_{F} is measured from the maximum point on the first line 32 of the footprint to the maximum point on the opposing line 34 of the footprint. For the footprint of FIG. 3, the maximum points occur at the footprint centerline; however, for a butterfly shaped footprint, the maximum points will occur towards the lateral edges of the footprint. Depending on the block length L selected for a particular tire tread configuration, the block length L is at least 100% of the footprint length L_{F}, and is preferably, 100 to 400% of the footprint length L_{F}, and more preferably, 100% to 300% of the footprint length L_{F}.

Because of the long length of the blocks 28, to provide for flexibility in the tread, the blocks 28 may be provided with decoupling grooves 36. The decoupling grooves 36 have a width substantially less than the lateral groove width W_{L}, but slightly greater than a conventional sipe width that closes upon contact with the ground. The decoupling grooves 36 do not significantly affect the water flow characteristics of the tread, and do not prevent the blocks 28 from achieving the desired rib-like characteristics.

Part of the goal of the extended length blocks 28 is for the blocks 28 to mimic the action of a tread rib element while retaining block element features. Important features of blocks are water evacuation and traction edges. To assist in achieving these features, in the tire footprint FL there are at least three overlapped blocks 28. At any point along the circumferential block length L, a line M drawn in the lateral direction of the tread will pass through at least two adjacent blocks 28 in the column. Additionally, a lateral line M drawn in at least one location along the length L of the block 28 will pass through at least three blocks 28 in the single column 24. Preferably, at the mid length ½L of any block 28, a lateral line M will pass through at least three circumferential adjacent blocks 28 in the column 24.

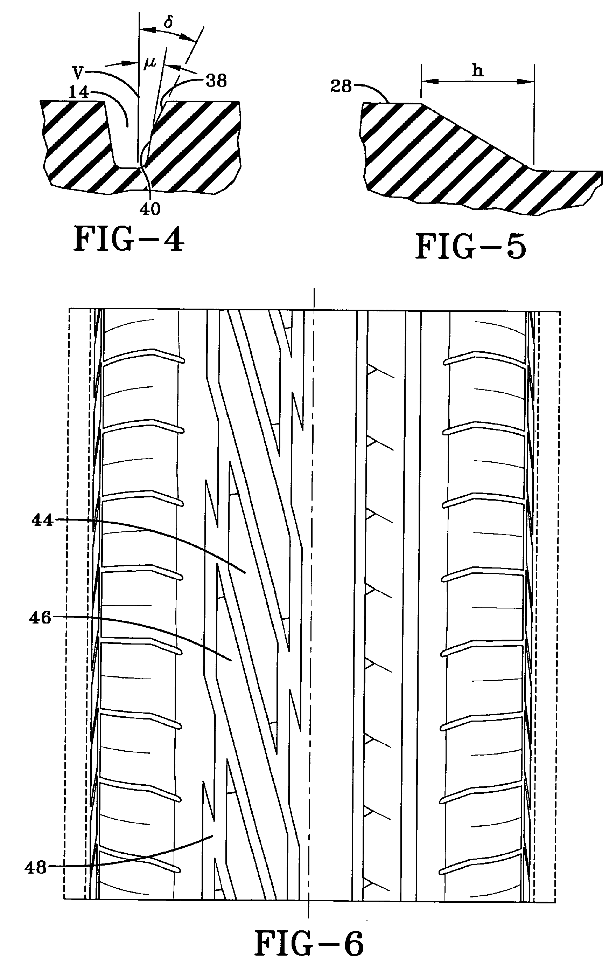

The circumferential sides b-c, d-a of the blocks 28 may be formed with dual angles to create a more open circumferential groove 14, or 16, see FIG. 4. The radially outer portion 38 of the block side, or groove wall, forms a larger angle δ relative to the vertical plane V than the angle µ, relative to the vertical plane V, formed by the radially inner portion 40 of the block side. The difference between the upper angle δ and the lower angle µ is at least 10°.

Another permissible variation in the tread blocks 28 is shown in FIG. 5. The acute angled corners a, c of the blocks 28 may be chamfered. When not chamfered, the acute angled corners a, c form a very sharp, very narrow tread point. Upon entering and exiting the tire contact patch as the tire rotates, this very narrow tread point is subjected to premature wear and chipping. By form a chamfer at the corners a, c, premature wear and chipping is reduced. For at least a minimal reduction in premature wear, if the tire is a unidirectional tread, only the corner a or c which enters the tire contact patch first during normal forward rotation of the tire may be chamfered. The chamfer length, h, is in the range of 10-50% of the length of circumferential block side b-c, d-a.

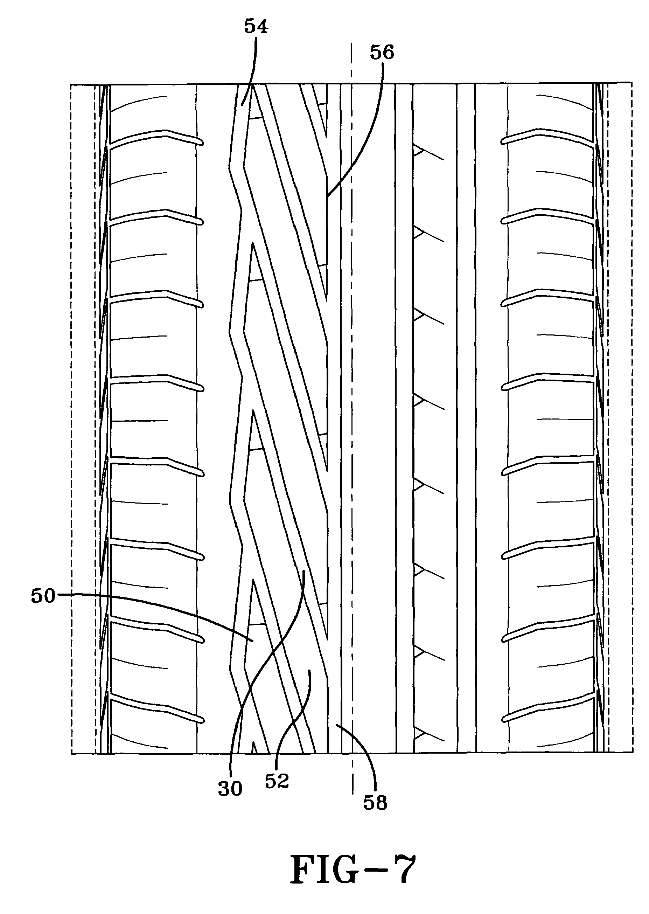

FIGS. 6 and 7 show additional alternatives for the block configurations in a tire tread.

In the tread of FIG. 6, alternating extended length blocks 44, 46 have different lateral lengths and axial widths. Blocks 44 have a lateral length and an axial width less than the lateral length and axial width of blocks 46. In maintaining a constant circumferential groove width W_{C}, the circumferential grooves 48 bordering the column of blocks 44, 46 have a resulting zigzag configuration. Similar to the leading narrow points of the blocks 44, 46, any similar edges to the adjacent block or rib columns may also be chamfered to reduce preliminary wear.

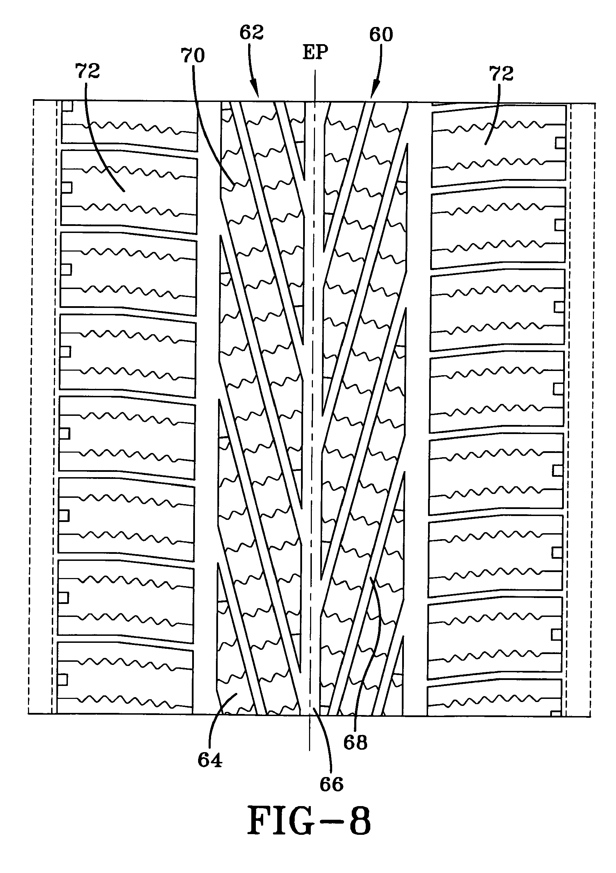

In the tread of FIG. 7, one short side 50 of the tetragon shaped blocks 52 is inclined relative to the tread centerline C_{L} at angle greater than 0°. The inclination angle of the short side 50 is preferably not greater than the inclination angle β of the lateral grooves 30. The circumferential groove 54 partially formed by the short side 50 has a zigzag configuration. The opposing short side 56 of the blocks 52 may also be similarly inclined; resulting in a similar configuration for both circumferential grooves 54, 58. When so inclined, either short side 50 or 56 may be inclined axially inward toward the center of the blocks 52, as illustrated for side 50, or away from the center of the blocks 52. FIG. 8 is another tread variation, suitable for a winter tire tread (Comparative Example). The tread is similar to that of FIG. 2, being comprised of two columns 60, 62 of long blocks 64. A circumferential groove 66 on the equatorial plane EP of the tread is common to both columns 60, 62. The lateral grooves 68 in each column 60, 62 are inclined in opposing directions relative to the equatorial plane EP of the tread. Additionally, the sides of the blocks 64 in each column 60, 62 partially forming the common circumferential groove 66 are circumferentially offset from the block sides in the adjacent column 62, 60. The long blocks 64 are formed with multiple sipes 70 to provide additional biting surfaces in the blocks. The tread edge blocks 72 are also provided with sipes 70.

Other variations in the tread are permissible. Most notably, the remaining tread features may be any combination of ribs and/or blocks, and the present invention is not limited to the exact treads illustrated herein. The circumferential grooves partially forming the extended length blocks may straddle the tread centerline to approximate a center rib. One of the circumferential grooves may itself be located on the tread centerline. Additionally, the lateral grooves are not required to be straight as illustrated. Any of a variety of features may be added or changed so long as the extended length shape of the blocks is maintained, permitting the block column to act like a rib to achieve rib-like characteristics for noise, durability, and handling performance

## Claims

1. A pneumatic tire, the tire comprising a tread, the tread comprising two circumferential grooves (14, 16) and a circumferentially extending column (24) of tetragon shaped blocks (28) located between the two circumferential grooves (14, 16), wherein in the circumferential extending column (24) of blocks (28), each block (28) is separated from an adjacent block by an inclined lateral groove (30), the inclined lateral groove (30) forming an angle (β) between 10° to 25° with one of the circumferential grooves (14, 16), wherein each block (28) in the column (24) has a circumferential length (L) at least equal to the normal pressure footprint length (L_{F}) of the tire, wherein the tread is divided at a tread centerline (CL) into two tread halves, wherein the two circumferential grooves (14, 16) and the column (24) there between are located in one tread half, and wherein the tetragon shaped blocks (28) are provided with decoupling grooves (36) having a width substantially less than the width of the inclined lateral groove (W_{L}) but slightly greater than a conventional sipe width that closes upon contact with the ground.

2. The tire of claim 1, wherein for any straight line (11) drawn in the lateral direction of the tread, the straight line (11) passes through at least two, preferably at least three, circumferentially adjacent blocks (28) in the circumferentially extending column (24) of blocks.

3. The tire of claim 1 or 2, wherein a straight line (11) drawn in the lateral direction of the tire at the mid-length (½ L), of the block (28) passes through at least three blocks (28) in the circumferentially extending column of blocks.

4. The tire of at least one of the previous claims, wherein the axial distance (W_{R}) between the two circumferential grooves (14, 16) being in the range of 15 to 50%, preferably 20% to 40%, of the tread width (T_{W}).

5. The tire of at least one of the previous claims, wherein each block (28) has a pair of opposing sides (b-c, a-d) forming a wall of the circumferential grooves (14, 16), the pair of sides being circumferentially spaced by a distance (f) in the range of 20% to 60%, preferably 30% to 50%, of the circumferential length (L) of the block (28).

6. The tire of at least one of the previous claims, wherein the blocks (28) have a width (W_{B}), measured perpendicular to the longest sides (b-a) of the blocks (28), in the range of 15% to 65%, preferably 25% to 50%, the distance (W_{R}) between the circumferential grooves (14, 16)

7. The tire of at least one of the previous claims, wherein alternating blocks in the circumferentially extending column (24) have different axial widths.

8. The tire of at least one of the previous claims, wherein the tetragon shaped blocks (28) have sides partially forming the two circumferential grooves (14, 16), and at least one of the sides is inclined at an angle greater than 0° relative to a tread centerline (C_{L}).

9. The tire of at least one of the previous claims, wherein each block (28) in the columns (24) has a circumferential length (L) of 100-400%, preferably 120% to 200%, of the normal pressure footprint length (L_{F}) of the tire.

10. The tire of claim 1 wherein at least one of acute angled corners of each block (28) is chamfered.

11. The tire of claim 1 wherein the sides of the blocks (28) forming a wall of the circumferential grooves (14, 16) have the radially outer portion thereof inclined at an angle relative to the radial direction of the tire greater than the inclination angle of the radially inner portion of the wall.

12. The tire of claim 11 wherein the radially outer portion of the groove wall is inclined at least 10° greater than the radially inner portion of the grove wall.

## Patentansprüche

1. Luftreifen, wobei der Reifen eine Lauffläche umfasst, wobei die Lauffläche zwei Umfangsrillen (14, 16) und eine sich in Umfangsrichtung erstreckende Reihe (24) von viereckigen Blöcken (28) aufweist, die sich zwischen den zwei Umfangsrillen (14, 16) befindet, wobei in der sich in Umfangsrichtung erstreckenden Reihe (24) von Blöcken (28) jeder Block (28) von einem benachbarten Block durch eine geneigte laterale Rille (30) getrennt ist, wobei die geneigte laterale Rille (30) einen Winkel (β) zwischen 10° und 25° mit einer der Umfangsrillen (14, 16) bildet, wobei jeder Block (28) in der Reihe (24) eine umfangsgerichtete Länge (L) aufweist, die mindestens gleich der Normaldruck-Aufstandsflächenlänge (L_{F}) des Reifens ist, wobei die Lauffläche an einer Laufflächenmittellinie (CL) in zwei Laufflächenhälften unterteilt ist, wobei die zwei Umfangsrillen (14, 16) und die Reihe (24) dazwischen sich in einer Laufflächenhälfte befinden, und wobei die viereckigen Blöcke (28) mit Entkopplungsrillen (36) versehen sind, die eine Breite aufweisen, die wesentlich geringer als die Breite der geneigten lateralen Rille (W_{L}) ist, jedoch etwas größer als ein herkömmlicher Feineinschnitt, der sich bei Kontakt mit dem Boden schließt.

2. Reifen nach Anspruch 1, wobei für gleich welche in der lateralen Richtung der Lauffläche gezogene gerade Linie (11) die gerade Linie (11) durch mindestens zwei, bevorzugt mindestens drei, in Umfangsrichtung benachbarte Blöcke (28) in der sich in Umfangsrichtung erstreckenden Reihe (24) von Blöcken verläuft.

3. Reifen nach Anspruch 1 oder 2, wobei eine in der lateralen Richtung des Reifens auf halber Länge (½zL) des Blocks (28) gezogene gerade Linie (11) durch mindestens drei Blöcke (28) in der sich in Umfangsrichtung erstreckenden Reihe von Blöcken verläuft.

4. Reifen nach mindestens einem der vorgenannten Ansprüche, wobei der axiale Abstand (W_{R}) zwischen den zwei Umfangsrillen (14, 16) im Bereich von 15 bis 50%, bevorzugt 20% bis 40%, der Laufflächenbreite (T_{w}) liegt.

5. Reifen nach mindestens einem der vorgenannten Ansprüche, wobei jeder Block (28) ein Paar gegenüberliegende Seiten (b-c, a-d) aufweist, die eine Wand der Umfangsrillen (14, 16) bilden, wobei das Seitenpaar um einen Abstand (f) im Bereich von 20% bis 60%, bevorzugt 30% bis 50%, der Umfangslänge (L) des Blocks (28) in Umfangsrichtung beabstandet ist.

6. Reifen nach mindestens einem der vorgenannten Ansprüche, wobei die Blöcke (28) eine Breite (W_{B}), gemessen lotrecht zu den längsten Seiten (b-a) der Blöcke (28), im Bereich von 15% bis 65%, bevorzugt 25% bis 50%, des Abstandes (W_{R}) zwischen den Umfangsrillen (14, 16) aufweisen.

7. Reifen nach mindestens einem der vorgenannten Ansprüche, wobei abwechselnde Blöcke in der sich in Umfangsrichtung erstreckenden Reihe (24) verschiedene axiale Breiten aufweisen.

8. Reifen nach mindestens einem der vorgenannten Ansprüche, wobei die viereckigen Blöcke (28) Seiten aufweisen, die teilweise die zwei Umfangsrillen (14, 16) bilden, und wobei mindestens eine der Seiten unter einem Winkel größer als 0° bezüglich einer Laufllächen-Mittellinie (C_{L}) geneigt ist.

9. Reifen nach mindestens einem der vorgenannten Ansprüche, wobei jeder Block (28) in den Reihen (24) eine Umfangslänge (L) von 100-400%, bevorzugt 120%-200%, der Normaldruck-Aufstandsflächenlänge (L_{F}) des Reifens aufweist.

10. Reifen nach Anspruch 1, wobei mindestens eine von spitzwinkligen Ecken jedes Blocks (28) mit einer Abfasung versehen ist.

11. Reifen nach Anspruch 1, wobei bei den Seiten der Blöcke (28), die eine Wand der Umfangsrillen (14, 16) bilden, der radial äußere Teil davon unter einem Winkel bezüglich der radialen Richtung des Reifens geneigt ist, der größer als der Neigungswinkel des radial inneren Teils der Wand ist.

12. Reifen nach Anspruch 11, wobei der radial äußere Teil der Rillenwand mindestens 10° mehr geneigt ist als der radial innere Teil der Rillenwand.

## Revendications

1. Bandage pneumatique, le bandage pneumatique comprenant une bande de roulement, la bande de roulement comprenant deux rainures circonférentielles (14, 16) et une colonne (24) de blocs (28) de configuration tétragonale, s'étendant en direction circonférentielle, située entre les deux rainures circonférentielles (14, 16), dans lequel, dans la colonne (24) de blocs (28), s'étendant en direction circonférentielle, chaque bloc (28) est séparé d'un bloc adjacent par une rainure latérale inclinée (30), la rainure latérale inclinée (30) formant un angle (β) entre 10° et 25° avec une des rainures circonférentielles (14, 16) ; dans lequel chaque bloc (28) dans la colonne (24) possède une longueur circonférentielle (L) au moins égale à la longueur d'empreinte (L_{F}), sous pression normale, du bandage pneumatique ; dans lequel la bande de roulement est divisée, à la ligne médiane de bande de roulement (CL), en deux moitiés de bande de roulement ; dans lequel les deux rainures circonférentielles (14, 16) et la colonne (24) située entre les deux sont disposées dans une moitié de bande de roulement ; et dans lequel les blocs (28) de configuration tétragonale sont munis de rainures de découplage (36) possédant une largeur essentiellement inférieure à la largeur de la rainure latérale inclinée (W_{L}), mais légèrement supérieure à une largeur de lamelle conventionnelle qui se referme lors d'une mise en contact avec le sol.

2. Bandage pneumatique selon la revendication 1, dans lequel, pour n'importe quelle ligne droite (11) tracée dans la direction latérale de la bande de roulement, la ligne droite (11) passe par au moins deux, de préférence au moins trois blocs (28) adjacents en direction circonférentielle dans la colonne (24) de blocs, s'étendant en direction circonférentielle.

3. Bandage pneumatique selon la revendication 1 ou 2, dans lequel une ligne droite (11) tracée dans la direction latérale du bandage pneumatique à la moitié de la longueur (½L) du bloc (28) passe par au moins trois blocs (28) dans la colonne de blocs s'étendant en direction circonférentielle.

4. Bandage pneumatique selon au moins une des revendications précédentes, dans lequel la distance axiale (W_{R}) entre les deux rainures circonférentielles (14, 16) représente une valeur dans la plage de 15 à 50 %, de préférence de 20 % à 40 %, de la largeur de bande de roulement (T_{W}) .

5. Bandage pneumatique selon au moins une des revendications précédentes, dans lequel chaque bloc (28) possède une paire de côtés opposés (b-c, a-d) formant une paroi des rainures circonférentielles (14, 16), la paire de côté étant espacée en direction circonférentielle d'une distance (f) dans la plage de 20 % à 60 %, de préférence de 30 % à 50 % de la longueur circonférentielle (L) du bloc (28).

6. Bandage pneumatique selon au moins une des revendication précédentes, dans lequel les blocs (28) possèdent une largeur (W_{B}), mesurée perpendiculairement aux plus grands côtés (b-a) des blocs (28), dans la plage de 15 % à 65 %, de préférence de 25 % à 50 % de la distance (W_{R}) séparant les rainures circonférentielles (14, 16).

7. Bandage pneumatique selon au moins une des revendications précédentes, dans lequel des blocs alternants dans la colonne (24) s'étendant en direction circonférentielle possèdent des largeurs axiales différentes.

8. Bandage pneumatique selon au moins une des revendications précédentes, dans lequel les blocs (28) de configuration tétragonale possèdent des côtés formant en partie les deux rainures circonférentielles (14, 16), au moins un des côtés étant incliné en formant un angle supérieur à 0° par rapport à la ligne médiane de bande de roulement (C_{L}).

9. Bandage pneumatique selon au moins une des revendications précédentes, dans lequel chaque bloc (28) dans les colonnes (24) possède une longueur circonférentielle (L) 200 à 400 %, de préférence de 120 % à 200 %, de la longueur d'empreinte (L_{F}), sous pression normale, du bandage pneumatique.

10. Bandage pneumatique selon la revendication 1, dans lequel au moins un coin en angle aigu de chaque bloc (28) est chanfreiné.

11. Bandage pneumatique selon la revendication 1, dans lequel la portion externe, en direction radiale, des côtés des blocs (28) formant une paroi des rainures circonférentielles (14, 16) est inclinée en formant un angle, par rapport à la direction radiale du bandage pneumatique, supérieur à l'angle d'inclinaison formé par la portion interne de la paroi, en direction radiale.

12. Bandage pneumatique selon la revendication 11, dans lequel la portion externe de la paroi de rainure, en direction radiale, est inclinée en formant un angle au moins supérieur à 10° par rapport à la portion interne de la paroi de rainure, en direction radiale.
